# EUROPÄISCHE PATENTANMELDUNG

(11) **EP 3 878 883 A1**
(43) Veröffentlichungstag der Anmeldung: **15.09.2021**
(21) Anmeldenummer: 20162970.6
(22) Anmeldetag: 13.03.2020
(51) Int. Cl.: C08G 18/36, C08G 18/42, C08G 18/68, C09J 153/02

(54) **MINERALÖLFREIER HAFTKLEBSTOFF**

(71) Anmelder: Henkel AG & Co. KGaA, 40589 Düsseldorf (DE)
(72) Erfinder: BRANDT, Adrian, 45219 Essen (DE); BECK, Horst, 41470 Neuss (DE); KUX, Alexander, 40789 Monheim (DE); BRAMMERTZ, Benjamin, 40699 Erkrath (DE)
(74) Vertreter: Viering, Jentschura & Partner mbB Patent- und Rechtsanwälte

(57) **Zusammenfassung**

Die vorliegende Erfindung betrifft eine Haftklebstoffzusammensetzung, enthaltend mindestens ein Polymer und mindestens ein Polyesterpolyol auf Basis von Betulin. Ferner betrifft die Erfindung eine Verwendung der erfindungsgemäßen Haftklebstoffzusammensetzung sowie ein Verfahren zur Herstellung der Haftklebstoffzusammensetzung und ein Verfahren zum Verkleben von mindestens zwei Substraten. Schließlich betrifft die Erfindung einen Artikel, der die erfindungsgemäße Haftklebstoffzusammensetzung umfasst.

## Beschreibung

Die vorliegende Erfindung betrifft eine Haftklebstoffzusammensetzung, enthaltend mindestens ein Polymer und mindestens ein Polyesterpolyol auf Basis von Betulin. Ferner betrifft die Erfindung eine Verwendung der erfindungsgemäßen Haftklebstoffzusammensetzung sowie ein Verfahren zur Herstellung der Haftklebstoffzusammensetzung und ein Verfahren zum Verkleben von mindestens zwei Substraten. Schließlich betrifft die Erfindung einen Artikel, der die erfindungsgemäße Haftklebstoffzusammensetzung umfasst.

Aus Gründen der Nachhaltigkeit und des wachsenden Umweltbewusstseins ist es wünschenswert Verbindungen auf Mineralölbasis mehr und mehr durch Stoffe auf Basis nachwachsender Rohstoffe zu ersetzen.

Kommerziell erhältliche Haftklebstoffzusammensetzungen enthalten typischerweise Weichmacher, die auf Mineralölen basieren. Es ist vorteilhaft, den Einsatz dieser Substanzen vor allem in Lebensmittelverpackungen, aber beispielsweise auch in Hygieneartikeln, und in vielen weiteren Bereichen so weit wie möglich zu reduzieren oder vollständig zu vermeiden, um beispielsweise eine Migration aus dem Klebstoff in das Verpackungsmaterial zu verhindern. Somit besteht Bedarf an Ersatzstoffen, die diese Weichmacher teilweise oder vollständig ersetzen können.

Viele der auf nachwachsenden Rohstoffen basierenden erhältlichen Alternativen sind nachteilig im Hinblick auf die Kompatibilität mit den übrigen Komponenten der Haftklebstoffzusammensetzung und/oder führen zu einem Leistungsabfall der Haftkennwerte der Klebstoffzusammensetzung.

Somit besteht die Aufgabe der vorliegenden Erfindung in der Bereitstellung einer Haftklebstoffzusammensetzung, die einen möglichst hohen Anteil an nachwachsenden Rohstoffen in der Formulierung aufweist, insbesondere durch weitgehendes Ersetzen der bisher eingesetzten Weichmacher auf Mineralölbasis, die gleichzeitig eine im Vergleich mit herkömmlichen Systemen gleichbleibende oder sogar verbesserte Leistungsfähigkeit in Bezug auf die Klebkraft und Stabilität aufweist und beispielsweise auch für die Herstellung von Lebensmittelverpackungen oder Hygieneartikeln geeignet ist.

Überraschend wurde gefunden, dass diese Aufgabe durch eine Haftklebstoffzusammensetzung gelöst wird, die mindestens ein Polymer und mindestens ein Polyesterpolyol auf Basis von Betulin umfasst. Besonders bevorzugt ersetzt dieses Polyesterpolyol die typischerweise eingesetzten Weichmacher auf Basis von Mineralölen, insbesondere naphthenische Öle, in der Haftklebstoffzusammensetzung zumindest teilweise, vorzugsweise sogar vollständig.

Ein erster Aspekt der Erfindung betrifft daher eine Haftklebstoffzusammensetzung, umfassend
a) mindestens ein Polymer;
b) mindestens ein Polyesterpolyol auf Basis von Betulin;
c) optional mindestens einen weiteren Weichmacher;
d) optional mindestens ein Harz; und
e) optional mindestens ein Additiv, bevorzugt mindestens einen Stabilisator.

Bevorzugt umfasst die erfindungsgemäße Haftklebstoffzusammensetzung mindestens ein Polymer ausgewählt aus der Gruppe von Polymeren auf Basis von Acrylat, Polyester, Urethan, Ethylen-Acrylat, Butyl-Kautschuk und (synthetischem) (Natur)kautschuk (synthetic rubber); Ethylen-Vinylacetat-Copolymeren (EVA), Polyolefin-(Co)polymeren (PO), Polyamid-(Co)polymeren (PA), Ethylen-Propylen-Copolymeren oder Styrol-Copolymeren, einzeln oder in Mischung, besonders bevorzugt ist es ein Styrolblock-Copolymer wie ein Styrol- und Styrol-Butadien-Copolymer (SBS, SBR), ein Styrol-Isopren-Copolymer (SIS), ein Styrol-Ethylen/Butylen-Copolymer (SEBS), ein Styrol-Ethylen/Propylen-Styrol-Copolymer (SEPS) oder ein Styrol-Isopren-Butylen-Copolymer (SIBS), am stärksten bevorzugt ein Styrol-Isopren-Styrol-Triblock-Copolymer. Generell werden in verscheidenen Ausführungsformen der Erfindung vor allem synthetische Kautschuke verwendet.

Besonders bevorzugt ist das Polymer in einer Menge von 10 bis 70 Gew.% bzw. 20 bis 70 Gew.% in der Zusammensetzung enthalten, bezogen auf das Gesamtgewicht der Zusammensetzung.

In bevorzugten Ausführungsformen wird das Polyesterpolyol aus einer Reaktionsmischung gewonnen, die die folgenden Monomereneinheiten umfasst:
i) Betulin, bevorzugt in einer Menge von 5 bis 40 Gew.%, insbesondere 10 bis 30 Gew.%;
ii) mindestens ein Triglycerid, bevorzugt in einer Menge von 30 bis 95 Gew.%, insbesondere 60 bis 80 Gew.%;
iii) optional mindestens eine Dicarbonsäure, bevorzugt in einer Menge von 2 bis 40 Gew.%, insbesondere 5 bis 20 Gew.%;
wobei die Gewichtsangaben jeweils auf das Gesamtgewicht der Monomereneinheiten bezogen sind.

Bevorzugt wird das Triglycerid ausgewählt aus der Gruppe bestehend aus Sojaöl, Leinöl, Sonnenblumenöl, Distelöl, Rapsöl, Pugiernusöl, Lichtbussbaumöl, Traubenkernöl, Canolaöl, Maiskeimöl, Cashewkernöl, Fischöl, Rizinusöl, Tallöl, Kokosöl, Palmöl, Palmkernöl, Olivenöl, Mohnöl, Hanföl, Avocadoöl, Algenöle und Mischungen oder Derivaten davon.

Die Dicarbonsäure kann beispielsweise aus der Gruppe bestehend aus aliphatischen, cycloaliphatischen und aromatischen Dicarbonsäuren mit 2 bis 20 Kohlenstoffatomen, wie z.B. Bernsteinsäure, Adipinsäure, Azelainsäure, Sebazinsäure, Dodekansäure, Tetradekandisäure, Furandicarbonsäure, Isophthalsäure, Terephthalsäure, Orthophthalsäure, Glutarsäure, Oxalsäure, Malonsäure, Itaconsäure deren Anhydriden und Mischungen davon ausgewählt werden.

In bevorzugten Ausführungsformen ist das Polyesterpolyol in einer Menge von 5 bis 40 Gew.% oder 5 bis 30 Gew.% in der Haftklebstoffzusammensetzung enthalten, bezogen auf das Gesamtgewicht der Zusammensetzung.

Die erfindungsgemäße Haftklebstoffzusammensetzung kann einen weiteren Weichmacher enthalten wobei die Zusammensetzung bevorzugt weniger als 5 Gew.%, stärker bevorzugt weniger als 3 Gew.%, noch stärker bevorzugt weniger als 1 Gew.%, noch stärker bevorzugt weniger als 0,5 Gew.%, noch stärker bevorzugt weniger als 0,1 Gew.%, noch stärker bevorzugt weniger als 0,01 Gew.%, von weiteren Weichmachern, bevorzugt von Mineralölen, insbesondere von naphthenischen Ölen, umfasst und am stärksten bevorzugt frei von diesen ist, bezogen auf das Gesamtgewicht der Zusammensetzung.

Es ist besonders bevorzugt, dass das Polyesterpolyol auf Basis von Betulin den weiteren Weichmacher teilweise oder vollständig ersetzt.

In einer bevorzugten Ausführungsform wird der weitere Weichmacher (oder die benötigte Weichmachermenge), stärker bevorzugt das Mineralöl, noch stärker bevorzugt das naphthenische Öl, in der Haftklebstoffzusammensetzung durch das Polyesterpolyol auf Basis von Betulin zu mindestens 50%, stärker bevorzugt zu mindestens 60%, noch stärker bevorzugt zu mindestens 70%, noch stärker bevorzugt zu mindestens 80%, noch stärker bevorzugt zu mindestens 90%, noch stärker bevorzugt zu mindestens 95%, noch stärker bevorzugt zu mindestens 98%, noch stärker bevorzugt zu mindestens 99%, und am stärksten bevorzugt zu 100% ersetzt.

Ferner kann die Haftklebstoffzusammensetzung mindestens ein Harz umfassen, welches bevorzugt ein Naturharz oder ein Kohlenwasserstoffharz ist, stärker bevorzugt ein Tallölester, Gum Rosin (Kolophonium), ein, gegebenenfalls partiell polymerisiertes, Tallharz, ein Terpen oder ein rohölbasiertes aliphatisches, aromatisches oder cycloaliphatisches Kohlenwasserstoffharz, sowie modifizierte oder hydrierte Versionen davon, beispielsweise C5-aliphatisches oder C9-aromatisches Kohlenwasserstoffharz oder eine C5/C9-Monomerenmischung.

In besonders bevorzugten Ausführungsformen ist das Harz in einer Menge von 15 bis 70 Gew.% in der Zusammensetzung enthalten, bezogen auf das Gesamtgewicht der Zusammensetzung.

In bevorzugten Ausführungsformen enthält die erfindungsgemäße Haftklebstoffzusammensetzung mindestens ein Additiv, welches bevorzugt ausgewählt ist aus der Gruppe bestehend aus Antioxidantien wie Stabilisatoren, Wachsen, UV-Protektoren, Lösungsmitteln, Haftvermittlern, Füllstoffen, Pigmenten, Flammschutzmitteln, UV-Absorbern, optischen Aufhellern und Duftstoffen, insbesondere Stabilisatoren.

In verschiedenen Ausführungsformen enthält die Haftklebstoffzusammensetzung das mindestens eine Additiv in einer Menge von 0,01 bis 20 Gew.%, bevorzugt in 0,1 bis 5 Gew.%, stärker bevorzugt in 0,5 bis 3 Gew.%, bezogen auf das Gesamtgewicht der Zusammensetzung.

In einem weiteren Aspekt betrifft die Erfindung ein Verfahren zur Herstellung der erfindungsgemäßen Haftklebstoffzusammensetzung, umfassend die Schritte:
a1) Bereitstellen eines Reaktionsgemisches, umfassend Betulin, mindestens ein Triglycerid und optional mindestens eine Dicarbonsäure, aus welchem das Polyesterpolyol auf Basis von Betulin gebildet wird oder sich bereits teilweise oder vollständig gebildet hat; oder
a2) Bereitstellen eines Polyesterpolyols auf Basis von Betulin; und
b) Vermischen des Reaktionsgemisches aus Schritt a1) oder des Polyesterpolyols auf Basis von Betulin aus Schritt a2) mit weiteren Komponenten der Haftklebstoffzusammensetzung, wie dem Polymer und gegebenenfalls weiteren Komponenten wie mindestens einem weiteren Weichmacher, mindestens einem Harz und/oder mindestens einem Additiv, in einer geeigneten Reihenfolge; bevorzugt bei einer Temperatur von 100 bis 200°C, stärker bevorzugt bei 120 bis 180°C.

In einem weiteren Aspekt betrifft die Erfindung eine Verwendung der erfindungsgemäßen Haftklebstoffzusammensetzung in
Tapes/Klebebändern ,
Labels/Etiketten,
Mehrschichtfolien, z.B. für Verschlussicherungen
Hygieneartikeln, z.B. Windeln,
Etikettierungen, z.B. von Getränkeflaschen,
flexiblen Verpackungen,
Lebensmittelverpacku ngen,
in medizinischen Anwendungen,
im Bereich Montage (high performance, wie z.B. in der Automobilindustrie), und/oder
in der graphischen Industrie (z.B. Bücher, Zeitschriften, Prospekte).

Weitere Beispiele sind die Beschichtung von selbstklebenden Folien. Generell sind die hierin beschriebenen Zusammensetzungen für Folienanwendungen geeignet, d.h. selbstklebende Folien, Bänder oder Etiketten.

In einem weiteren Aspekt betrifft die Erfindung einen Artikel, umfassend die erfindungsgemäße Haftklebstoffzusammensetzung.

Schließlich betrifft die Erfindung ein Verfahren zum Verkleben von mindestens zwei Substraten, wobei auf mindestens ein Substrat die erfindungsgemäße Haftklebstoffzusammensetzung aufgetragen wird und danach die mindestens zwei Substrate zusammengefügt werden.

Diese und weitere Ausführungsformen, Merkmale und Vorteile der Erfindung werden für den Fachmann aus dem Studium der folgenden detaillierten Beschreibung und der Ansprüche ersichtlich. Dabei können einzelne beschriebene Merkmale oder Ausführungsformen der Erfindung mit anderen Merkmalen oder Ausführungsformen der Erfindung kombiniert werden ohne dass diese im Rahmen der Erfindung in Kombination beschrieben wurden. Es ist selbstverständlich, dass die hierin enthaltenen Beispiele die Erfindung beschreiben und veranschaulichen sollen, diese aber nicht einschränken und insbesondere die Erfindung nicht auf die Beispiele beschränkt ist.

"Mindestens ein", wie hierin verwendet, bezieht sich auf 1 oder mehr, beispielsweise 2, 3, 4, 5, 6, 7, 8, 9 oder mehr. Im Zusammenhang mit den hierin beschriebenen Polymeren bezieht sich diese Angabe nicht auf die absolute Menge an Molekülen, sondern auf die Art der Verbindung. "mindestens ein Polymer" bedeutet daher beispielsweise, dass nur eine Art von Polymer oder mehrere verschiedene Arten von Polymer, ohne Angaben über die Menge der einzelnen Verbindungen zu machen, enthalten sein können.

Alle im Zusammenhang mit der hierin beschriebenen Haftklebstoffzusammensetzung angegeben Mengenangaben beziehen sich, sofern nichts anderes angegeben ist, auf Gew.% jeweils bezogen auf das Gesamtgewicht der Zusammensetzung. Des Weiteren beziehen sich derartige Mengenangaben, die sich auf mindestens einen Bestandteil beziehen, immer auf die Gesamtmenge dieser Art von Bestandteil, der in der Zusammensetzung enthalten ist, sofern nicht explizit etwas anderes angegeben ist. Das heißt, dass sich derartige Mengenangaben, beispielsweise im Zusammenhang mit "mindestens einem Polymer", auf die Gesamtmenge von Polymer, welche in der Zusammensetzung enthalten sind, bezieht, wenn nicht explizit etwas anderes angegeben ist.

Zahlenwerte, die hierin ohne Dezimalstellen angegeben sind, beziehen sich jeweils auf den vollen angegebenen Wert mit einer Dezimalstelle. So steht beispielsweise "99 %" für "99,0 %".

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

"Ungefähr", wie hierin in Bezug auf Zahlenwerte verwendet, bedeutet den entsprechenden Wert ±10%, vorzugsweise ±5%.

Wenn hierin auf Molmassen Bezug genommen wird, beziehen sich diese Angaben immer auf die zahlenmittlere Molmasse Mₙ, sofern nicht explizit anders angegeben. Das Zahlenmittel der Molmasse kann beispielsweise mittels Gel-Permeations-Chromatographie (GPC) gemäß DIN 55672-1:2007-08 mit THF als Eluent bestimmt werden. Die massenmittlere Molmasse M_{w} kann ebenfalls mittels GPC bestimmt werden, wie für Mₙ beschrieben.

Die Polyester der Erfindung schließen auch Umesterungsprodukte von Betulin mit Triglyceriden, insbesondere die derart entstehenden Makromere ein. Der Begriff "Polyester" wie hierin verwendet erfasst somit nicht nur klassische Polyester mit von Säuren und Alkoholen abgeleiteten Wiederholungseinheiten, sondern auch die oben beschriebenen Makromere, die durch Umesterung von Triglyceriden mit Betulin entstehen.

Betulin ist auch als 3a-Hydroxymethyl-1-isopropenyl-5a,5b,8,8,11a-pentamethyl-icosahydro-cyclopenta[a]chrysene-9-ol bekannt.

Die Erfindung betrifft in einem ersten Aspekt eine Haftklebstoffzusammensetzung, umfassend
a) mindestens ein Polymer;
b) mindestens ein Polyesterpolyol auf Basis von Betulin;
c) optional mindestens einen weiteren Weichmacher;
d) optional mindestens ein Harz; und
e) optional mindestens ein Additiv, bevorzugt mindestens einen Stabilisator.

Bevorzugt ist die Haftklebstoffzusammensetzung eine Schmelzhaftklebstoffzusammensetzung (hotmelt pressure-sensitive adhesive (PSA) composition). Stärker bevorzugt ist die Haftklebstoffzusammensetzung eine nicht-reaktive Haftklebstoffzusammensetzung, insbesondere eine nicht-reaktive Schmelzhaftklebstoffzusammensetzung.

Ein "Haftklebstoff" ist ein typischer Vertreter eines nicht aushärtenden Klebstoffes. Unter "Schmelzhaftklebstoffen" (PSA, hotmelt pressure sensitive adhesives) werden im Allgemeinen bei Raumtemperatur feste, insbesondere Wasser- und lösemittelfreie Klebstoffe verstanden. Sie werden typischerweise auf die zu verklebenden Teile aus der Schmelze aufgetragen und binden nach dem Zusammenfügen beim Abkühlen unter Verfestigung physikalisch ab. Bevorzugt bleiben solche Schmelzhaftklebstoffe beim Abkühlen permanent klebrig und klebfähig und haften bei leichtem Anpressdruck sofort auf fast allen Substraten.

"Nicht-reaktiv" oder "physikalisch abbindend" bedeutet in diesem Zusammenhang typischerweise, dass die Verfestigung in einem physikalischen Vorgang erfolgt (z.B. durch Erstarren beim Abkühlen, oder durch Verdampfen von Lösemitteln oder Wasser).

Die erfindungsgemäße Haftklebstoffzusammensetzung enthält mindestens ein Polymer.

Beispiele für solche Polymere sind, ohne darauf beschränkt zu sein, Polymere auf Basis von Acrylat, Polyester, Urethan, Ethylen-Acrylat, Butyl-Kautschuk und (synthetischem) Naturkautschuk; Ethylen-Vinylacetat-Copolymere (EVA), Polyolefin-(Co)polymere (PO), Polyamid-(Co)polymer (PA), Ethylen-Propylen-Copolymere oder Styrol-Copolymere einzeln oder in Mischung, wobei es sich bei den Copolymeren typischerweise um statistische, alternierende, Pfopf- oder Block-Copolymere handelt. Bevorzugt sind thermoplastischen Elastomere ausgewählt aus der Gruppe der Styrolblock-Copolymeren, beispielsweise Styrol- und Styrol-Butadien-Copolymere (SBS, SBR), Styrol-Isopren-Copolymere (SIS), Styrol-Ethylen/Butylen-Copolymere (SEBS), Styrol-Ethylen/Propylen-Styrol-Copolymere (SEPS) oder Styrol-Isopren-Butylen-Copolymere (SIBS). Solche Produkte sind dem Fachmann bekannt und kommerziell erhältlich.

Besonders bevorzugt ist das mindestens eine Polymer ein Styrol-Block-Copolymer wie Styrol-Isopren-Styrol (SIS), Styrol-Butadien-Styrol (SBS) oder Styrol-Ethylen-Butadien-Styrol (SEBS), stärker bevorzugt ein Styrol-Isopren-Styrol-Triblock-Copolymer.

In einer bevorzugten Ausführungsform ist das Polymer in einer Menge von 10 bis 70 Gew.%, bevorzugt 20 bis 70 Gew.%, stärker bevorzugt 25 bis 50 Gew.%, am stärksten bevorzugt 28 bis 40 Gew.%, in der Haftklebstoffzusammensetzung enthalten, bezogen auf das Gesamtgewicht der Zusammensetzung.

Vorzugsweise wird das in der erfindungsgemäßen Haftklebstoffzusammensetzung enthaltene Polyesterpolyol durch Umsetzung von Betulin und einem oder mehreren Triglyceriden gewonnen. In einer bevorzugten Ausführungsform weist das Triglycerid mindestens eine freie Hydroxygruppe auf. Dabei kann die freie Hydroxygruppe bereits in der Verbindung vorhanden sein oder durch Funktionalisierung eingeführt werden. In einer weiteren bevorzugten Ausführungsform kann die Umsetzung des Betulins mit dem einen oder mehreren Triglyceriden in Gegenwart einer oder mehrerer Dicarbonsäuren durchgeführt werden. Der Einsatz einer oder mehrere Dicarbonsäuren kann bevorzugt dazu genutzt werden, die Viskosität und andere Eigenschaften des Polyesterpolyols einzustellen.

Die Zusammensetzung der Reaktionsmischung, aus der das in der erfindungsgemäßen Haftklebstoffzusammensetzung enthaltene Polyesterpolyol gewonnen wird, kann gemäß den zu erreichenden Eigenschaften des Polyesterpolyols, wie beispielsweise seiner Viskosität oder seiner Glasübergangstemperatur angepasst werden. Es hat sich jedoch als vorteilhaft erwiesen, wenn der Anteil an Betulin in der Reaktionsmischung nicht zu groß ist, um eventuellen Verarbeitungsproblemen der Rohstoffe vorzubeugen.

In bevorzugten Ausführungsformen weist das Polyesterpolyol eine Glasübergangstemperatur von -70°C bis 0°C auf, welche mittels Dynamischer Differenz-Thermoanalyse (DSC, engl. Differential Scanning Calorimetry) ermittelt werden kann.

In einer bevorzugten Ausführungsform wird das Polyesterpolyol aus einer Reaktionsmischung gewonnen, die die folgenden Monomereneinheiten umfasst:
i) Betulin, bevorzugt in einer Menge von 5 bis 50 Gew.%, stärker bevorzugt von 5 bis 40 Gew.%, stärker bevorzugt von 10 bis 35 Gew.%, insbesondere von 10 bis 30 Gew.% oder 25 bis 35 Gew.%;
ii) mindestens ein Triglycerid, bevorzugt in einer Menge von 20 bis 85 Gew.% oder 20 bis 85 Gew.%, stärker bevorzugt von 20 bis 80 Gew.%, noch stärker bevorzugt von 30 bis 80 Gew.%, noch stärker bevorzugt von 40 bis 80 Gew.%, insbesondere von 60 bis 80 Gew.% oder 40 bis 70 Gew.%; und
iii) optional mindestens eine Dicarbonsäure, bevorzugt in einer Menge von 2 bis 45 Gew.%, stärker bevorzugt von 5 bis 45 Gew.% oder 2 bis 40 Gew.%, insbesondere von 5 bis 20 Gew.% oder 8 bis 40 Gew.%;
wobei die Gewichtsangaben jeweils auf das Gesamtgewicht der Monomereneinheiten bezogen sind.

Vorzugsweise ist das Polyesterpolyol auf Basis von Betulin bei Raumtemperatur flüssig.

In bevorzugten Ausführungsformen wird das mindestens eine Triglycerid, ohne darauf beschränkt zu sein, aus der Gruppe bestehend aus Sojaöl, Leinöl, Sonnenblumenöl, Distelöl, Rapsöl, Pugiernusöl, Lichtbussbaumöl, Traubenkernöl, Canolaöl, Maiskeimöl, Cashewkernöl, Fischöl, Rizinusöl, Tallöl, Kokosöl, Palmöl, Palmkernöl, Olivenöl, Mohnöl, Hanföl, Avocadoöl, Algenöle und Mischungen und Derivaten davon ausgewählt.

Besonders bevorzugt sind Rizinusöl, Sojaöl und Derivate und Mischungen dieser Verbindungen, insbesondere Rizinusöl und Derivate davon. Weiterhin können auch synthetische oder biotechnisch hergestellte Triglyceride verwendet werden.

Bei der Dicarbonsäure handelt es sich bevorzugt um eine Dicarbonsäure ausgewählt aus der Gruppe bestehend aus aliphatischen Dicarbonsäuren mit 4 bis 24 Kohlenstoffatomen, aromatischen Dicarbonsäuren, Dimerfettsäuren sowie Mischungen und Derivaten davon. Bei den Derivaten kann es sich beispielsweise um Ester, Säurechloride oder Anhydride der Carbonsäuren handeln.

Geeignete aliphatische Dicarbonsäuren umfassen bevorzugt Bernsteinsäure, Adipinsäure, Azelainsäure, Sebazinsäure, Dodekandisäure, Tetradekandisäure und Mischungen davon.

Geeignete aromatische Dicarbonsäuren werden bevorzugt aus der Gruppe bestehend aus Phthalsäure, Isophthalsäure, Terephthalsäure, Furandicarbonsäure, deren Anhydride und Methylester, und Mischungen davon ausgewählt.

In einer bevorzugten Ausführungsform handelt es sich bei der oder den Dimerfettsäuren um Dimere von Fettsäuren der allgemeinen Formel CₙH₂ₙ₊₁COOH, wobei n eine ganze Zahl von 4 bis 33, bevorzugt 7 bis 17 ist. In bevorzugten Ausführungsformen werden neben Dimerfettsäuren auch deren Derivate eingesetzt, die beispielsweise durch Hydrieren oder Destillieren der entsprechenden Dimerfettsäure erhalten werden. Weiterhin bevorzugt ist die Fettsäure ausgewählt aus der Gruppe bestehend aus Carylsäure, Caprinsäure, Laurinsäure, Myristinsäure, Palmitinsäure, Stearinsäure, den Derivaten dieser Fettsäuren sowie Mischungen davon.

In einer besonders bevorzugten Ausführungsform wird die Dicarbonsäure ausgewählt aus der Gruppe bestehend aus Bernsteinsäure, Adipinsäure, Azelainsäure, Sebazinsäure, Dodekansäure, Tetradekandisäure, Furandiscarbonsäure, Isophthalsäure, Terephthalsäure, Orthophthalsäure, Glutarsäure, Oxalsäure, Malonsäure, Itaconsäure und Mischungen davon, insbesondere wird Bernsteinsäure als Dicarbonsäure eingesetzt.

Die erfindungsgemäße Haftklebstoffzusammensetzung enthält das mindestens eine Polyesterpolyol auf Basis von Betulin vorzugsweise in einer Menge von 1 bis 50 Gew.%, stärker bevorzugt von 2 bis 40 Gew.%, noch stärker bevorzugt von 5 bis 30 Gew.%, jeweils bezogen auf das Gesamtgewicht der Haftklebstoffzusammensetzung.

Kommerziell erhältliche Haftklebstoffzusammensetzungen enthalten meist Weichmacher. Diese werden beispielsweise eingesetzt, um die Viskosität der Haftklebstoffzusammensetzung zu verringern und die Benetzung zu verbessern. Gängige Weichmacher, die in diesem Zusammenhang eingesetzt werden, sind beispielsweise medizinische Weißöle, naphthenische Mineralöle, Adipate, Polypropylen-, Polybutylen-, Polyisopren-Oligomere, hydrierte Polyisopren- und/oder Polybutadien-Oligomere, Benzoatester, Phthalate, pflanzliche oder tierische Öle und deren Derivate, Sulfonsäureester, ein- oder mehrwertige Alkohole, Polyalkylenglykole, wie Polypropylenglykol, Polybutylenglykol oder Polymethylenglykol. Polybutylenoligomere sollten ein Molekulargewicht von 200 bis 6 000 g/mol aufweisen, Polyolefine sollten ein Molekulargewicht M_{w} bis etwa 2000 g/mol aufweisen, insbesondere bis 1000 g/mol. Insbesondere werden Poly(iso)butylene und flüssige oder pastöse hydrierte Kohlenwasserstoffe eingesetzt, insbesondere Polyisobutylen mit einem Molekulargewicht Mw kleiner 5000.

Oft werden ölartige Weichmacherkomponenten eingesetzt werden. Beispielhafte WeichmacherKomponenten sind bei Raumtemperatur eine Flüssigkeit, beispielsweise Kohlenwasserstoff-Öle, Polybutylen-/Polyisopren-Oligomere, (hydrierte) naphthenische Öle, Paraffinöle oder Pflanzenöle.

Die erfindungsgemäße Haftklebstoffzusammensetzung ist allerdings bevorzugt frei von weiteren Weichmachern. Es ist besonders bevorzugt, dass das Polyesterpolyol auf Betulinbasis den konventionellen Weichmacher, insbesondere auf Mineralölbasis (z.B. naphthenisches Öl) in der erfindungsgemäßen Haftklebstoffzusammensetzung teilweise oder vollständig ersetzt.

Mineralöle werden typischerweise durch Destillation von Erdöl und gegebenenfalls anderer fossiler Rohstoffe hergestellt. Mineralöle umfassen beispielsweise paraffinische, naphthenische und aromatische Kohlenwasserstoffe, Alkene sowie schwefel- und stickstoffhaltige oder organische Verbindungen. Der Begriff "naphthenisches Öl" bezieht sich hierbei insbesondere auf gesättigte ringförmige Kohlenwasserstoffe.

In einer bevorzugten Ausführungsform umfasst die Haftklebstoffzusammensetzung weniger als 5 Gew.%, stärker bevorzugt weniger als 3 Gew.%, noch stärker bevorzugt weniger als 1 Gew.%, noch stärker bevorzugt weniger als 0,5 Gew.%, noch stärker bevorzugt weniger als 0,1 Gew.%, noch stärker bevorzugt weniger als 0,01 Gew.%, von weiteren Weichmachern, bevorzugt von Mineralölen, insbesondere von naphthenischen Ölen, und am stärksten bevorzugt ist sie frei von diesen, bezogen auf das Gesamtgewicht der Haftklebstoffzusammensetzung.

In einer bevorzugten Ausführungsform wird der mindestens eine weitere Weichmacher (oder die benötigte Weichmachermenge) zu mindestens 50%, stärker bevorzugt zu mindestens 60%, noch stärker bevorzugt zu mindestens 70%, noch stärker bevorzugt zu mindestens 80%, noch stärker bevorzugt zu mindestens 90%, noch stärker bevorzugt zu mindestens 95%, noch stärker bevorzugt zu mindestens 98%, noch stärker bevorzugt zu mindestens 99% und am stärksten bevorzugt zu 100% in der Haftklebstoffzusammensetzung durch das mindestens eine Polyesterpolyol auf Basis von Betulin ersetzt.

In einer weiteren bevorzugten Ausführungsform weist die Haftklebstoffzusammensetzung einen Anteil an nachwachsenden Rohstoffen von 50 bis 100 Gew.%, bevorzugt von mindestens 60 Gew.%, stärker bevorzugt mindestens 70 Gew.%, noch stärker bevorzugt mindestens 80 Gew.%, noch stärker bevorzugt mindestens 90 Gew.%, noch stärker bevorzugt mindestens 95 Gew.%, am stärksten bevorzugt von mindestens 99 Gew.% auf, jeweils bezogen auf das Gesamtgewicht der Haftklebstoffzusammensetzung.

Die erfindungsgemäße Haftklebstoffzusammensetzung kann neben dem mindestens einen Polyesterpolyol auf Basis von Betulin ferner mindestens ein Harz enthalten.

Harze werden typischerweise eingesetzt, um die Viskosität der erfindungsgemäßen Haftklebstoffzusammensetzung zu ändern, bevorzugt zu erniedrigen, und den Geruch, die (Anfangs-)farbe und die Farbstabilität der Zusammensetzung, sowie die Klebrigkeit und Polarität der gegebenenfalls enthaltenen Polymere zu beeinflussen.

Es handelt sich dabei insbesondere um Harze, die einen Erweichungspunkt von 70 bis 130 °C (Ring-Ball-Methode, DIN 52011) besitzen. Geeignete Harze sind beispielsweise, ohne darauf beschränkt zu sein, aromatische, aliphatische oder cycloaliphatische Kohlenwasserstoff-Harze, sowie modifizierte oder hydrierte Versionen davon. Konkrete Beispiele sind: aliphatische oder alicyclische Petroleum-Kohlenwasserstoffharze und hydrierte Derivate davon. Weitere, im Rahmen der Erfindung einsetzbare Harze sind z.B. Hydroabietylalkohol und seine Ester, insbesondere Ester mit aromatischen Carbonsäuren wie Terephthalsäure und Phthalsäure; modifizierte Naturharze wie Harzsäuren aus Balsamharz, Tallharz oder Wurzelharz, z.B. vollverseiftes Balsamharz; Alkylester von gegebenenfalls teilhydriertem Kolophonium mit niedrigen Erweichungspunkten wie z.B. Methyl-, Diethylenglykol-, Glycerin- und Pentaerythrit-Ester; Terpen-Harze, insbesondere Terpolymere oder Copolymere des Terpens, wie Styrol-Terpene, α-Methyl-Styrol-Terpene, Phenol-modifizierte Terpenharze sowie hydrierte Derivate davon; Acrylsäure-Copolymerisate, vorzugsweise Styrol-Acrylsäure-Copolymere und Harze auf Basis funktioneller Kohlenwasserstoffharze.

Vorzugsweise ist das mindestens eine Harz ein Naturharz oder ein Kohlenwasserstoffharz, stärker bevorzugt ein Tallölester, Gum Rosin (Kolophonium), ein, gegebenenfalls partiell polymerisiertes, Tallharz, ein Terpen oder ein rohölbasiertes aliphatisches, aromatisches oder cycloaliphatisches Kohlenwasserstoffharz, sowie modifizierte oder hydrierte Versionen davon, beispielsweise C5-aliphatisches oder C9-aromatisches Kohlenwasserstoffharz oder eine C5/C9-Monomerenmischung.

In einer besonderen Ausführungsform ist das mindestens eine Harz in einer Menge von 15 bis 70 Gew.%, bevorzugt 20 bis 60 Gew.% in der Haftklebstoffzusammensetzung enthalten, bezogen auf das Gesamtgewicht der Zusammensetzung.

Erfindungsgemäß können sowohl feste, als auch flüssige Harze eingesetzt werden.

Die erfindungsgemäße Haftklebstoffzusammensetzung kann ferner mindestens ein Additiv enthalten. Geeignete Additive, ohne darauf beschränkt zu sein, sind beispielsweise Komponenten aus der Gruppe bestehend aus Antioxidantien, insbesondere Stabilisatoren, Wachsen, UV-Protektoren, Lösungsmitteln, Haftvermittlern, Füllstoffen, Pigmenten, Flammschutzmitteln, UV-Absorbern, optischen Aufhellern und Duftstoffen.

Bevorzugt ist das mindestens eine Additiv in einer Menge von 0,01 bis 20 Gew.%, stärker bevorzugt in 0,1 bis 5 Gew.%, noch stärker bevorzugt in 0,5 bis 3 Gew.% in der Zusammensetzung enthalten, bezogen auf das Gesamtgewicht der Zusammensetzung.

Besonders bevorzugt werden Antioxidantien wie Stabilisatoren in der erfindungsgemäßen Haftklebstoffzusammensetzung eingesetzt, bevorzugt in einer Menge von 0,01 bis 10 Gew.%, stärker bevorzugt von 0,1 bis 5 Gew.%, noch stärker bevorzugt von 0,5 bis 2 Gew.%. Sie werden beispielsweise gegen thermischen und oxidativen Abbau durch Sauerstoff und UV-Strahlung eingesetzt. Ferner können Antioxidantien die Wärmestabilität und/oder Farbstabilität verbessern.

Beim Einsatz von Stabilisatoren ist darauf zu achten, dass eine Verträglichkeit mit der Haftklebstoffzusammensetzung gegeben ist. Beispielsweise können als Stabilisatoren die unter dem Handelsnamen Irganox® (BASF SE) erhältlichen Antioxidantien, vorzugsweise in Mengen von 0,5 bis 1,5 Gew.%, beispielsweise 1 Gew.%, bezogen auf das Gesamtgewicht der Zusammensetzung eingesetzt werden.

In verschiedenen Ausführungsformen können der Haftklebstoffzusammensetzung gegebenenfalls Wachse in Mengen von 0,5 bis 5 Gew.-% zugegeben werden. Die Menge ist dabei so bemessen, dass einerseits die Viskosität auf den gewünschten Bereich abgesenkt wird, andererseits aber die Adhäsion nicht negativ beeinflusst wird. Das Wachs kann natürlichen, ggf. auch in chemisch modifizierter Form, oder synthetischen Ursprungs sein. Als natürliche Wachse können pflanzliche Wachse, tierische Wachse, Mineralwachse oder petrochemische Wachse eingesetzt werden. Als chemisch modifizierte Wachse können Hartwachse wie Montanesterwachse, Sasolwachse usw. eingesetzt werden. Als synthetische Wachse finden Polyalkylenwachse sowie Polyethylenglykolwachse Verwendung. Vorzugsweise werden petrochemische Wachse wie Petrolatum, Paraffinwachse, mikrokristalline Wachse sowie synthetische Wachse eingesetzt. Besonders bevorzugt sind paraffinische und/oder mikrokristalline Wachse und/oder hydrierter Versionen davon, insbesondere Polypropylen- oder Polyethylenwachs mit einem Tropfpunkt bestimmt nach ASTM D-3954 von 50°C bis 170°C.

Die Konsistenz der erfindungsgemäßen Haftklebstoffzusammensetzung kann gemäß den jeweiligen Anforderungen angepasst werden, beispielsweise durch Zugabe von geeigneten Lösungsmitteln. In verschiedenen Ausführungsformen weist die erfindungsgemäße Haftklebstoffzusammensetzung ferner ein oder mehrere Lösungsmittel auf.

Unter Berücksichtigung der erheblichen ökologischen und ökonomischen Anforderungen, die mit der Verwendung insbesondere organischer Lösungsmittel verbunden sind, ist es jedoch vorteilhaft, auf den Einsatz von Lösungsmitteln zu verzichten. Daher ist eine Ausführungsform bevorzugt, in der die erfindungsgemäße Haftklebstoffzusammensetzung frei von Lösungsmitteln ist. Auf den Einsatz von Lösungsmittel kann ganz oder teilweise verzichtet werden, wenn die Eigenschaften des verwendeten Polyesterpolyols entsprechend gewählt werden. In diesem Zusammenhang ist daher eine Ausführungsform der erfindungsgemäßen Haftklebstoffzusammensetzung bevorzugt, in der das eingesetzte Polyesterpolyol auf Basis von Betulin eine OH-Zahl von 5 bis 200 mg KOH/g, vorzugsweise 20 bis 140 mg KOH/g aufweist. Die Hydroxylzahl (OH-Zahl) gilt erfindungsgemäß als ein Maß für die Anzahl an freien Hydroxygruppen in einer jeweils definierten Bezugsmenge. Die OH-Zahl kann dabei experimentell mittels potentiometrischer Titration oder mittels Säure-Base-Titration bestimmt werden.

In einer bevorzugten Ausführungsform ist die erfindungsgemäße Haftklebstoffzusammensetzung lösemittelhaltig, lösemittelfrei oder eine Dispersion.

In einer besonders bevorzugten Ausführungsform umfasst oder besteht die Haftklebstoffzusammensetzung aus
a) mindestens einem Polymer, bevorzugt ein SIS-Polymer;
b) mindestens einem Polyesterpolyol auf Basis von Betulin;
c) mindestens einem Harz, bevorzugt ein Tallölharz wie Pentaerythritolharzester oder ein aliphatisches Kohlenwasserstoffharz; und
d) mindestens einem Additiv, bevorzugt ein Stabilisator;
wobei die Komponenten bevorzugt wie nachfolgend beschrieben in der Haftklebstoffzusammensetzung eingesetzt werden:
a) 10 bis 70 Gew.%, bevorzugt 20 bis 70 Gew.%, stärker bevorzugt 25 bis 40 Gew.%; und/oder
b) 1 bis 50 Gew.%, stärker bevorzugt 2 bis 40 Gew.%, noch stärker bevorzugt 5 bis 30 Gew.%; und/oder
c) 15 bis 70 Gew.%, bevorzugt 20 bis 60 Gew.%; und/oder
d) 0,01 bis 20 Gew.%, bevorzugt in 0,1 bis 5 Gew.%, stärker bevorzugt in 0,5 bis 3 Gew.%; bezogen auf das Gesamtgewicht der Haftklebstoffzusammensetzung.

In einer anderen Ausführungsform umfasst oder besteht die Haftklebstoffzusammensetzung aus
a) mindestens einem Polymer, bevorzugt ein SIS-Polymer;
b) mindestens einem Polyesterpolyol auf Basis von Betulin;
c) mindestens einem Harz, bevorzugt ein Tallölharz wie Pentaerythritolharzester oder ein aliphatisches Kohlenwasserstoffharz;
d) mindestens einem Additiv, bevorzugt mindestens einen Stabilisator;
e) optional mindestens einem Wachs; und
f) optional mindestens einem weiteren Weichmacher;
wobei die Komponenten bevorzugt wie nachfolgend beschrieben in der Haftklebstoffzusammensetzung eingesetzt werden:
a) 10 bis 70 Gew.%, bevorzugt 20 bis 70 Gew.%, stärker bevorzugt 25 bis 40 Gew.%; und/oder
b) 1 bis 50 Gew.%, stärker bevorzugt 2 bis 40 Gew.%, noch stärker bevorzugt 5 bis 30 Gew.%;
c) 15 bis 70 Gew.%, bevorzugt 20 bis 60 Gew.%; und/oder
d) 0,01 bis 20 Gew.%, bevorzugt 0,1 bis 10 Gew.%, stärker bevorzugt 0,5 bis 5 Gew.%; und/oder
e) maximal 10 Gew.%, bevorzugt maximal 8 Gew.%, stärker bevorzugt maximal 5 Gew.%;
f) maximal 15 Gew.%, bevorzugt, maximal 5 Gew.%, stärker bevorzugt maximal 1 Gew.%, noch stärker bevorzugt maximal 0,1 Gew.%, noch stärker bevorzugt maximal 0,01 Gew.%, am stärksten bevorzugt frei von weiteren Weichmachern;
   bezogen auf das Gesamtgewicht der Haftklebstoffzusammensetzung.

Insbesondere an Lebensmittelverpackungen sowie an die bei deren Herstellung verwendeten Substanzen werden hohe Anforderungen gestellt. So stehen neben den mechanischen Eigenschaften insbesondere gesundheitliche Aspekte im Vordergrund. Im Rahmen der vorliegenden Erfindung wurde überraschend gefunden, dass durch den Einsatz eines Polyesterpolyols auf Basis von Betulin die Bildung sogenannter kritischer migrierfähiger Zyklen verhindert werden kann. Unter kritischen migrierfähigen Zyklen werden Verbindungen verstanden, die in der Lage sind aus dem Klebstoff in das Verpackungsmaterial oder das verpackte Produkt, beispielsweise ein Lebensmittel, zu migrieren und die somit ein gesundheitsschädliches Potential aufweisen. Daher ist eine Ausführungsform der erfindungsgemäßen Haftklebstoffzusammensetzung bevorzugt, in der der Anteil an kritischen migrierfähigen Bestandteilen in der Haftklebstoffzusammensetzung weniger als 300 ppm, vorzugsweise weniger als 200 ppm und besonders bevorzugt weniger als 50 ppm beträgt, wobei die ppm Gewichtsanteile bezeichnen und sich die Angaben auf das Gesamtgewicht der Haftklebstoffzusammensetzung beziehen.

In bevorzugten Ausführungsformen der erfindungsgemäßen Haftklebstoffzusammensetzung ersetzt das Polyesterpolyol auf Basis von Betulin teilweise oder vollständig migrierfähige naphthenische Öle oder andere Mineralöle. Aufgrund seines polymeren Charakters findet mit den Polyesterpolyolen auf Basis von Betulin im Vergleich zu migrierfähigen naphthenischen Ölen bevorzugt keine oder eine stark reduzierte Migration aus dem Klebstoff in Materialien, wie beispielsweise in Verpackungsmaterialien oder in das verpackte Produkt statt. Das gilt insbesondere für Materialien auf Basis von Polyethylen, da aufgrund der Esterstruktur des Polyesterpolyols keine Migration stattfindet.

Ferner wird durch den Ersatz von naphthenischen Ölen durch Polyesterpolyole auf Basis von Betulin der Anteil an nachwachsenden Rohstoffen in der Formulierung erhöht.

Bevorzugt weist die erfindungsgemäße Haftklebstoffzusammensetzung eine geringere Viskosität im Vergleich zu anderen Klebstoffzusammensetzungen auf, wodurch sie bei niedrigeren Temperaturen aufgetragen werden kann. Das führt zu Energie- und Kosteneinsparungen beim Kunden.

In einer bevorzugten Ausführungsform weist der erfindungsgemäße Haftklebstoff eine Brookfield Viskosität (z.B. messbar mit 20 RPM mit Spindel 27) bei 140°C von 5000 bis 160000 mPas, insbesondere 8000 bis 30000 mPas, auf.

Bevorzugt liegt der Erweichungspunkt der erfindungsgemäßen Haftklebstoffzusammensetzung höher, stärker bevorzugt um mindestens 5°C, insbesondere um mindestens 10°C höher, als der Erweichungspunkt von Referenzklebstoffzusammensetzungen, was eine erhöhte Wärmestandfestigkeit hervorrufen kann.

In einer bevorzugten Ausführungsform ist der Erweichungspunkt des erfindungsgemäßen Haftklebstoffes über 100°C, insbesondere über 105°C (Ring-Ball-Methode, ASTM D36, Glycerin).

In bevorzugten Ausführungsformen weist die erfindungsgemäße Haftklebstoffzusammensetzung ferner eine verbesserte Temperaturstabilität in Anwendungen auf.

Bevorzugt weist die erfindungsgemäße Haftklebstoffzusammensetzung eine Glasübergangstemperatur von -50 bis 80°C, stärker bevorzugt von -10 bis 30°C, auf (Messung: DMA).

Ein weiterer Gegenstand der vorliegenden Erfindung ist ein Verfahren zur Herstellung der erfindungsgemäßen Haftklebstoffzusammensetzung, umfassend die Schritte:
a1) Bereitstellen eines Reaktionsgemisches, umfassend Betulin, mindestens ein Pflanzenöl und optional mindestens eine Dicarbonsäure, aus welchem das Polyesterpolyol auf Basis von Betulin gebildet wird oder sich bereits teilweise oder vollständig gebildet hat; oder
a2) Bereitstellen eines Polyesterpolyols auf Basis von Betulin; und
b) Vermischen des Reaktionsgemisches aus Schritt a1) oder des Polyesterpolyols auf Basis von Betulin aus Schritt a2) mit weiteren Komponenten der Haftklebstoffzusammensetzung, wie dem Polymer und gegebenenfalls weiteren Komponenten wie mindestens einem weiteren Weichmacher, mindestens einem Harz, und/oder mindestens einem Additiv, in einer geeigneten Reihenfolge; bevorzugt bei einer Temperatur von 100 bis 200°C, stärker bevorzugt bei 120 bis 180°C.

In einer bevorzugten Ausführungsform werden zuerst die weiteren Komponenten der Haftklebstoffzusammensetzung, wie Polymer, Harz und Additiv, bereitgestellt und vermischt, bevor das Reaktionsgemisch aus Schritt a1) oder das Polyesterpolyol aus Schritt a2) zugegeben wird.

Ein weiterer Gegenstand der vorliegenden Erfindung ist die Verwendung der erfindungsgemäßen Haftklebstoffzusammensetzung in Tapes, Labels, Hygieneartikeln wie Windeln, Etikettierungen, z.B. von Getränkeflaschen, flexiblen Verpackungen, Folien, Lebensmittelverpackungen, im Bereich Montage (high performance, wie z.B. in der Automobilindustrie), medizinischen Anwendungen und/oder in der graphischen Industrie (z.B. Bücher, Zeitschriften, Prospekte).

Die erfindungsgemäßen Haftklebstoffe werden zum Verkleben von Substraten wie Glas, Metall, z.B. Stahl, Geweben, Vliesen (non-wovens), lackiertem oder unlackiertem Papier, Kartonagen und Kunststoffen, wie z.B. PET, PEN, PE, PP, PVC und PS, verwendet. Auf solche festen Substrate werden dann dünne flexible Substrate geklebt, beispielsweise aus Folien, Mehrschichtfolien oder Papier. Dabei handelt es sich beispielsweise um Etiketten, Umverpackungen, Taschen usw. Diese können beispielsweise aus Kunststoffen hergestellt sein, z.B. aus Polyethylen, Polypropylen, Polystyrol, Polyvinylchlorid oder Zellglas, insbesondere aus PE-Folien. Weiterhin können die Etiketten aber auch auf Papier basieren, gegebenenfalls in Kombination mit Polymerfilmen. Die erfindungsgemäßen Schmelzhaftklebstoffe zeichnen sich insbesondere durch eine sehr gute Adhäsion auf den vorgenannten Kunststoffen aus, dabei können diese auch von den Substratoberflächen wieder entfernt werden.

Weitere Anwendungsfelder werden beispielsweise in der internationalen Patentveröffentlichung WO 2016/062797 A1, insbesondere den Seiten 10-11, beschrieben

In einer bevorzugten Ausführungsform beträgt die Menge an Haftklebstoffzusammensetzung, die aufgetragen wird 1 bis 200 g/m², vorzugsweise 2 bis 70 g/m², stärker bevorzugt 10 bis 60 g/m².

In einer bevorzugten Ausführungsform können die Substrate gegebenenfalls einer Vorbehandlung unterworfen werden und/oder die beiden Substrate unter Druck zusammengefügt werden.

Ein weiterer Gegenstand der vorliegenden Erfindung ist ein Artikel, der die erfindungsgemäße Haftklebstoffzusammensetzung umfasst. In einer bevorzugten Ausführungsform ist der Artikel gemäß dem erfindungsgemäßen Verfahren erhältlich. Vorzugsweise handelt es sich bei dem Artikel um ein mehrschichtiges Substrat, insbesondere für Verpackungen für Lebensmittel und pharmazeutische Erzeugnisse, für Hygieneartikel, im Bereich "Label" und "Etikettierung" aber auch zur Anwendung in der Automobilindustrie oder der graphischen Industrie.

Alle Sachverhalte, Gegenstände und Ausführungsformen, die für die erfindungsgemäße Haftklebstoffzusammensetzung beschrieben sind, sind auch auf die erfindungsgemäßen Verfahren, den erfindungsgemäßen Artikel und die erfindungsgemäße Verwendung anzuwenden. Daher wird an dieser Stelle ausdrücklich auf die Offenbarung an entsprechender Stelle verwiesen mit dem Hinweis, dass diese Offenbarung auch für die erfindungsgemäße Verwendung, den erfindungsgemäßen Artikel und die erfindungsgemäßen Verfahren gilt.

Die Erfindung wird im Folgenden anhand von Beispielen illustriert, ist aber nicht auf diese beschränkt.

### Beispiele

### Beispiel 1

Die Herstellung der Polyesterpolyole als polymerer mineralölfreier Rohstoff für Haftklebstoffe erfolgte nach folgendem Schema:
In einem 1 Liter-Vierhalskolben ausgerüstet mit Stickstoffeinleitung, Thermostat, Flügelrührer und Destillationsarm wurde Rizinusöl oder ein anderes Pflanzenöl vorgelegt und die entsprechende Menge Antioxidans (1 Gew.% Chinox 1010) und Betulin nacheinander bei Raumtemperatur eingerührt. Die Reaktionsmischung wurde schrittweise aufgeheizt und bei einer Temperatur von 220°C im Stickstoffstrom für ungefähr 1 Stunde gerührt. Sodann wurde die Reaktionsmischung abgekühlt und optional 0,02 Gew.% bezogen auf die Reaktionsmischung an Katalysator (85%ige Phosphorsäure) hinzugegeben.

Im Anschluss daran wurde die Reaktionsmischung auf 220°C erhitzt und für weitere 30 Minuten unter Stickstoff gerührt. Anschließend wurde die Temperatur auf 200°C reduziert und im Stickstoffgegenstrom optional die entsprechende Menge Dicarbonsäure (z.B. Bernsteinsäure) hinzugegeben. Danach wurde die Temperatur wieder auf 220°C erhöht und für weitere 6 Stunden gerührt. Daraufhin wurde der Druck im Reaktionskolben schrittweise auf 30 mbar reduziert. Die Säurezahl wurde laufend kontrolliert. Sobald die Säurezahl unterhalb eines Wertes von 3 mg KOH/g bezogen auf die Reaktionsmischung sank, wurde die Reaktionsmischung zunächst so abgekühlt, dass anhand der entsprechenden Viskosität der Reaktionsmischung eine Probenentnahme für analytische Messungen möglich war. Hiernach wurde die Säurezahl und Hydroxylzahl endgültig bei 20°C bestimmt und die Mischung chromatographisch charakterisiert. Wenn keine Dicarbonsäure zugegeben wird, kann die Reaktionskontrolle über die Viskosität und eine optische Beurteilung (z.B. Homogenisierung der Mischung zu einer Phase) vorgenommen werden.

Zur chromatographischen Charakterisierung mittels Gelpermeationschromatographie (GPC) wurde eine Probe der Reaktionsmischung mit Tetrahydrofuran gelöst und auf die Säule gegeben und im Folgenden auch mit Tetrahydrofuran eluiert. Die Gelpermeationschromatographie (GPC) mit RI-Detektor nach Kalibrierung mittels Polystyrol-Standards erfolgte bei einer Säulenofentemperatur von 40°C und einer Temperatur im Detektor von ebenfalls 40°C. Aus der Molmassenverteilungskurve wurden die relativen zahlen- und gewichtsmittleren Molmassenmittelwerte ermittelt und daraus die Polydispersität bestimmt.

Die Polyesterpolyole wurden differenzkalorimetrisch vermessen, wobei eine Probe der Reaktionsmischung zunächst auf 150°C aufgeheizt wurde, um anschließend mit einer Abkühlrate von 10 Kelvin pro Minute auf -90°C gebracht zu werden. Nach 10 Minuten bei -90°C wurde die Probe der Reaktionsmischung mit einer Aufheizrate von 10 Kelvin pro Minute auf 150°C gebracht und das DSC-Diagramm aufgezeichnet. Mit Hilfe des DSC-Diagramms wurden Glasübergangstemperaturen der flüssigen Polyesterpolyole bestimmt.

In der Tabelle sind die Einwaagen und die spezifischen Monomere zur Herstellung eines Polyesterpolyols sowie dessen Kennzahlen wiedergegeben.

**Tabelle 1: Einwaagen und spezifische Monomere zur Herstellung eines Polyesterpolyols**

| Beispiel | Monomer -Zusammensetzung | Viskosität Brookfield bei 140°C | Glasübergangstemperatur | Säurezahl in mg KOH/g Probe | OH-Zahl in mg KOH/ g Probe | Mn in g/mol | Polydispersität |
|---|---|---|---|---|---|---|---|
| Formulie rung 1 | 75,78g Betulin (17,8 mol%) 379,40g Rizinusöl (42,7 mol%) 44,85g Bernsteinsäure (39,5 mol%) | 100mPas | -51°C | 1,8 | 70 | 2984 | 2,5 |

Die Herstellung kann mit jedem Pflanzenöl (Sojaöl, Leinöl, Sonnenblumenöl, Distelöl, Rapsöl, Pugiernusöl, Lichtbussbaumöl, Traubenkernöl, Canolaöl, Maiskeimöl, Cashewkernöl, Fischöl, Rizinusöl, Tallöl, Kokosöl, Palmöl, Palmkernöl, Olivenöl, Mohnöl, Hanföl, Avocadoöl, Algenöle und Mischungen davon) analog verlaufen. Die Zugabe von Dicarbonsäuren (wie Bernsteinsäure) ist nicht zwingend erforderlich, kann aber dazu genutzt werden die Viskosität und andere Eigenschaften einzustellen.

### Beispiel 2

Die Herstellung eines Haftklebstoffs mit Polyesterpolyolen aus Beispiel 1:
Die angeführten Rohstoffe wurden nach der in der folgenden Tabelle angeführten Mischfolge unter der angegebenen Temperatur formuliert. Der Klebstoff wurde mit einem Propellerrührer mit Umdrehungsgeschwindigkeiten von 50-250 rpm gemischt.

**Tabelle 2: Formulierung**

| Rohstofftyp | Gew. % | Einwaage in g | Mischungstemperatur |
|---|---|---|---|
| SIS-Polymer | 30 | 60 | 160°C |
| Harz | 26,5 | 53 | |
| Harz | 27,5 | 55 | |
| Polyester nach Beispiel 1 | 15,0 | 30 | |
| Stabilisator | 1,0 | 2 | |

Der erfindungsgemäße Klebstoff weist eine geringere Viskosität bei 140°C auf. Dadurch kann er im Vergleich zu Referenzklebstoff 1 bei niedrigeren Temperaturen aufgetragen werden. Dies führt zu Energie- und Kosteneinsparungen beim Kunden.

Trotz der geringeren Viskosität bei 140°C weißt der Haftklebstoff eine um 12-14°C höhere Erweichungspunkt auf und ergibt eine höhere Wärmestandfestigkeit im Vergleich zu den Referenzklebstoffen .

**Tabelle 3: Physikalische Eigenschaften**

| Methode | Mineralölfreier Haftklebstoff | Referenz 1 Technomelt 8746 | Referenz 2 Technomelt PS 1212 |
|---|---|---|---|
| Brookfield Viskosität (20 RPM mit Spindel 27) in mPas | 140°C: 12300 | 140°C: 26500 | 140°C: - |
| | 160°C:9200 | 160°C: 11425 | 160°C:9700 |
| Softening point in °C (Ring & Ball, ASTM D36, Glycerin) | 110,2 | 98,0 | 96,4 |
| Tg (DMA) in °C | 6,9 | 7,9 | -2,2 |
| Crossover (DMA) in °C | 89,5 | 86,1 | 74,6 |

Die zur Durchführung der Hafttests erforderlichen Beschichtungen werden im Labormaßstab auf einem beheizbaren Beschichtungstisch angefertigt. Dieser Tisch verfügt über ein beheiztes und bewegliches Rakel, mit der der Klebstoff über den Tisch gezogen werden kann. Die Einstellung der Schichtdicke wird anhand zweier Stellschrauben zur Grobjustierung und wiederum Zweier zur Feinjustierung vorgenommen. Die Anzeige der Spaltbreite zwischen Rakel und Heizplatte erfolgt über zwei Manometer, welche über den Stellschrauben, auf dem Rakel aufliegen. Hier kann die Spaltbreite in Mikrometern über eine Skala abgelesen werden. Aufgetragen wird auf Silikonpapier, welches durch Vakuum auf der Platte fixiert wird. Nachdem die Klebstoffschicht aufgetragen ist, wird auf eine PET-Folie aufgewalzt. Nach Kontrolle des Auftragsgewichtes mit einer maximalen Abweichung von ±10% und einer Ruhezeit von 24 Stunden, kann die angefertigte Beschichtung zum Test verwendet werden. Die Beschichtungen wurden mit einer 50 µm dicken PET-Folie und einem Auftragsgewicht von 40 g/m² angefertigt.

In der folgenden Tabelle sind 180° Schäl- und Loop Tack-Klebewerte auf verschiedenen Substraten angegeben. Der erfindungsgemäße und mineralölfreie Klebstoff zeigt vergleichbare Werte mit einem guten label und alrounder Haftklebstoff (Referenz 1) und deutlich bessere Werte im Vergleich zu einem Standard label Haftklebstoff (Referenz 2).

**Tabelle 4: Haftklebeeigenschaften**

| Methode | Substrat | Klebewerte mineralölfreier Haftklebstoff | Referenz 1 Technomelt 8746 | Referenz 2 Technomelt PS 1212 |
|---|---|---|---|---|
| Peel 180° (FINAT-FTM1) bezogen auf 25 mm breite PET Beschichtung | Stahl (nach 20 Min.) | 34 N | 39 N | 18 N |
| | Stahl (nach 24 Std.) | 33 N | 36 N | 17 N |
| | LD-Polyethylen (nach 20 Min.) | 20 N | 19 N | |
| | LD-Polyethylen (nach 24 Std.) | 19 N | 17 N | |
| | Non-Woven Vlies (nach 20 Min.) | 13 N | 12 N | |
| | Cardboard/Karton | 18 N | 17 N | |
| Loop Tack bezogen auf 25mm x 25 mm PET Beschichtung | Stahl | 44 N | 47 N | |
| | Glas | 43 N | 34 N | 27 N |
| | LD-Polyethylen | 15 N | 24 N | |

## Patentansprüche

1. Haftklebstoffzusammensetzung, umfassend
a) mindestens ein Polymer;
b) mindestens ein Polyesterpolyol auf Basis von Betulin;
c) optional mindestens einen weiteren Weichmacher;
d) optional mindestens ein Harz; und
e) optional mindestens ein Additiv, bevorzugt mindestens einen Stabilisator.

2. Die Haftklebstoffzusammensetzung gemäß Anspruch 1, wobei das mindestens eine Polymer ausgewählt ist aus der Gruppe von Polymeren auf Basis von Acrylat, Polyester, Urethan, Ethylen-Acrylat, Butyl-Kautschuk und (synthetischem) Naturkautschuk; Ethylen-Vinylacetat-Copolymeren (EVA), Polyolefin-(Co)polymeren (PO), Polyamid-(Co)polymeren (PA), Ethylen-Propylen-Copolymeren oder Styrol-Copolymeren, einzeln oder in Mischung, besonders bevorzugt ist es ein Styrolblock-Copolymer wie ein Styrol- und Styrol-Butadien-Copolymer (SBS, SBR), ein Styrol-Isopren-Copolymer (SIS), ein Styrol-Ethylen/Butylen-Copolymer (SEBS), ein Styrol-Ethylen/Propylen-Styrol-Copolymer (SEPS) oder ein Styrol-Isopren-Butylen-Copolymer (SIBS), am stärksten bevorzugt ein Styrol-Isopren-Styrol-Triblock-Copolymer, wobei das Polymer insbesondere in einer Menge von 20 bis 70 Gew.% in der Zusammensetzung enthalten ist, bezogen auf das Gesamtgewicht der Zusammensetzung.

3. Die Haftklebstoffzusammensetzung gemäß Anspruch 1 oder 2, wobei das Polyesterpolyol aus einer Reaktionsmischung gewonnen wird, die die folgenden Monomereneinheiten umfasst:
i) Betulin, bevorzugt in einer Menge von 5 bis 40 Gew.%, insbesondere 10 bis 30 Gew.%;
ii) mindestens ein Triglycerid, bevorzugt in einer Menge von 30 bis 95 Gew.%, insbesondere 60 bis 80 Gew.%;
iii) optional mindestens eine Dicarbonsäure, bevorzugt in einer Menge von 2 bis 40 Gew.%, insbesondere 5 bis 20 Gew.%;
wobei die Gewichtsangaben jeweils auf das Gesamtgewicht der Monomereneinheiten bezogen sind.

4. Die Haftklebstoffzusammensetzung gemäß Anspruch 3, wobei das Triglycerid ausgewählt ist aus der Gruppe bestehend aus Sojaöl, Leinöl, Sonnenblumenöl, Distelöl, Rapsöl, Pugiernusöl, Lichtbussbaumöl, Traubenkernöl, Canolaöl, Maiskeimöl, Cashewkernöl, Fischöl, Rizinusöl, Tallöl, Kokosöl, Palmöl, Palmkernöl, Olivenöl, Mohnöl, Hanföl, Avocadoöl, Algenöle und Mischungen oder Derivaten davon.

5. Die Haftklebstoffzusammensetzung gemäß Anspruch 3 oder 4, wobei die Dicarbonsäure ausgewählt ist aus der Gruppe bestehend aus Bernsteinsäure, Adipinsäure, Azelainsäure, Sebazinsäure, Dodekansäure, Tetradekandisäure, Furandiscarbonsäure, Isophthalsäure, Terephthalsäure, Orthophthalsäure, Glutarsäure, Oxalsäure, Malonsäure, Itaconsäure und Mischungen davon.

6. Die Haftklebstoffzusammensetzung gemäß einem der Ansprüche 1 bis 5, wobei das Polyesterpolyol in einer Menge von 5 bis 40 Gew.% in der Zusammensetzung enthalten ist, bezogen auf das Gesamtgewicht der Zusammensetzung.

7. Die Haftklebstoffzusammensetzung gemäß einem der Ansprüche 1 bis 6, wobei die Zusammensetzung weniger als 5 Gew.%, stärker bevorzugt weniger als 3 Gew.%, noch stärker bevorzugt weniger als 1 Gew.%, noch stärker bevorzugt weniger als 0,5 Gew.%, noch stärker bevorzugt weniger als 0,1 Gew.%, noch stärker bevorzugt weniger als 0,01 Gew.%, von weiteren Weichmachern, bevorzugt von Mineralölen, insbesondere von naphthenischen Ölen, umfasst und am stärksten bevorzugt frei von diesen ist, bezogen auf das Gesamtgewicht der Zusammensetzung.

8. Die Haftklebstoffzusammensetzung gemäß einem der Ansprüche 1 bis 7, wobei das mindestens eine Harz ein Naturharz oder ein Kohlenwasserstoffharz ist, stärker bevorzugt ein Tallölester, Gum Rosin (Kolophonium), ein, gegebenenfalls partiell polymerisiertes, Tallharz, ein Terpen oder ein rohölbasiertes aliphatisches, aromatisches oder cycloaliphatisches Kohlenwasserstoffharz, sowie modifizierte oder hydrierte Versionen davon, beispielsweise C5-aliphatisches oder C9-aromatisches Kohlenwasserstoffharz oder eine C5/C9-Monomerenmischung, insbesondere ist das Harz in einer Menge von 15 bis 70 Gew.% in der Zusammensetzung enthalten, bezogen auf das Gesamtgewicht der Zusammensetzung.

9. Die Haftklebstoffzusammensetzung gemäß einem der Ansprüche 1 bis 8, wobei das mindestens eine Additiv mindestens einen Stoff aus der Gruppe bestehend aus Antioxidantien wie Stabilisatoren, Wachsen, UV-Protektoren, Lösungsmitteln, Haftvermittlern, Füllstoffen, Pigmenten, Flammschutzmitteln, UV-Absorbern, optischen Aufhellern und Duftstoffen umfasst, insbesondere ist das mindestens eine Additiv in einer Menge von 0,01 bis 20 Gew.% in der Zusammensetzung enthalten, bezogen auf das Gesamtgewicht der Zusammensetzung.

10. Verfahren zur Herstellung der Haftklebstoffzusammensetzung gemäß einem der Ansprüche 1 bis 9, umfassend die Schritte:
a1) Bereitstellen eines Reaktionsgemisches, umfassend Betulin, mindestens ein Triglycerid und optional mindestens eine Dicarbonsäure, aus welchem das Polyesterpolyol auf Basis von Betulin gebildet wird oder sich bereits teilweise oder vollständig gebildet hat; oder
a2) Bereitstellen eines Polyesterpolyols auf Basis von Betulin; und
b) Vermischen des Reaktionsgemisches aus Schritt a1) oder des Polyesterpolyols aus Schritt a2) mit weiteren Komponenten der Haftklebstoffzusammensetzung, wie dem mindestens einen Polymer und gegebenenfalls weiteren Komponenten wie mindestens einem weiteren Weichmacher, mindestens einem Harz und/oder mindestens einem Additiv, in einer geeigneten Reihenfolge;
bevorzugt bei einer Temperatur von 100 bis 200°C, stärker bevorzugt bei 120 bis 180°C.

11. Verwendung der Haftklebstoffzusammensetzung gemäß einem der Ansprüche 1 bis 9 in Tapes, Labels, Hygieneartikeln wie Windeln, Etikettierungen, z.B. von Getränkeflaschen, flexiblen Verpackungen, Lebensmittelverpackungen, im Bereich Montage (high performance, wie z.B. in der Automobilindustrie), und/oder in der graphischen Industrie (z.B. Bücher, Zeitschriften, Prospekte).

12. Artikel, umfassend eine Haftklebstoffzusammensetzung nach einem oder mehreren der Ansprüche 1 bis 9.

13. Verfahren zum Verkleben von mindestens zwei Substraten, wobei auf mindestens ein Substrat die Haftklebstoffzusammensetzung gemäß einem der Ansprüche 1 bis 9 aufgetragen wird und danach die mindestens zwei Substrate zusammengefügt werden.
